# EUROPÄISCHE PATENTANMELDUNG

(11) **EP 1 037 040 A1**
(43) Veröffentlichungstag der Anmeldung: **20.09.2000**
(21) Anmeldenummer: 00104039.3
(22) Anmeldetag: 26.02.2000
(51) Int. Cl.: G01N 27/407, G01K 7/26

(54) **Temperaturfühler**

(30) Priorität: 10.03.1999 DE 19910444
(71) Anmelder: ROBERT BOSCH GMBH, 70442 Stuttgart (DE)
(72) Erfinder: Müller, Bernd, Dipl.-Ing., 71229 Leonberg (DE); Brinz, Thomas, Dipl.-Chemiker, 73266 Bissingen (DE); Schumann, Bernd, Physiker, 71277 Rutesheim (DE)

(57) **Zusammenfassung**

Die Erfindung betrifft einen Temperaturfühler, insbesondere für einen Gassensor, mit wenigstens einer Leiterbahn, wobei eine temperaturabhängige Änderung eines Widerstands der Leiterbahn erfaßt und ausgewertet wird.

Es ist vorgesehen, daß die Leiterbahn (42) wenigstens einen Abschnitt (44) aufweist, der aus einem Festelektrolyt besteht.

## Beschreibung

Die Erfindung betrifft einen Temperaturfühler, insbesondere für einen Gassensor, mit den im Oberbegriff des Anspruchs 1 genannten Merkmalen.

### Stand der Technik

Temperaturfühler der gattungsgemäßen Art sind bekannt. Ihr Einsatz in Gassensoren dient der Erfassung und Regelung einer Betriebstemperatur des Gassensors. Solche Gassensoren werden beispielsweise zur Bestimmung eines Sauerstoffpartialdrucks in einem Abgas einer Verbrennungskraftmaschine benötigt. Sie sind dabei üblicherweise schichtweise aufgebaut, wobei die einzelnen Schichten die zur Gewährung der Funktionalität notwendigen Elemente beinhalten.

Die einzelnen Schichten bestehen aus einem keramischen Material, das beispielsweise durch Foliengießen, Stanzen, Siebdrucken, Laminieren, Schneiden, Sintern oder dergleichen dauerhaft aufgebracht und verfügt wird. Einzelne keramische Schichten weisen dabei eine Leiterbahn aus einem Cermet auf, oder sie bestehen aus einem Festelektrolyt und besitzen somit die Fähigkeit, einen elektrischen Strom zu leiten. Solche Gassensoren zeigen wenigstens einen Bereich, in dem zwischen wenigstens zwei Cermetelektroden ein Festelektrolyt aufgebracht ist. In Abhängigkeit von beispielsweise dem Sauerstoffpartialdruck ändert sich die Leitfähigkeit des Festelektrolyten und ist damit ein direktes Maß für die Konzentration des Sauerstoffs im Abgas. Für eine exakte Meßwerterfassung ist es jedoch notwendig, daß einerseits die Temperatur über 300 °C liegt, da erst bei einer solchen Temperatur der Festelektrolyt die notwendige Grundleitfähigkeit besitzt. Daher weisen Gassensoren wenigstens eine Heizeinrichtung auf.

Andererseits schwankt die Temperatur des Abgases während des Betriebes der Verbrennungskraftmaschine stark. Da die Leitfähigkeit des Festelektrolyten temperaturabhängig ist, muß diese Temperaturänderung erfaßt werden.

Bekannt ist, solche Gassensoren mit Temperaturfühlern auszustatten, die eine temperaturabhängige Änderung eines Widerstands einer Leiterbahn erfassen und auswerten. Zum einen kann der Widerstand der Leiterbahn der Heizeinrichtung gemessen werden. Die Leiterbahnen bestehen üblicherweise aus einem Cermet, wobei als Metall beispielsweise Platin eingesetzt wird. Der Widerstand ist dann von dem metallisch leitenden Platin dominiert. Nachteilig hierbei ist, daß ein Widerstandstemperaturkoeffizient klein ist und diese geringe Temperaturabhängigkeit des Widerstands oft nicht ausreichend ist, um eine geeignete Steuerung aufzubauen.

Zum anderen kann eine Temperaturerfassung über den Widerstand des Festelektrolyten erfolgen, wobei damit bei den bekannten Sensoren der Festelektrolyt eine Doppelfunktion besitzt. Der Festelektrolyt besitzt einen wesentlich größeren Widerstandstemperaturkoeffizienten. Nachteilig bei den bekannten Verfahren ist es, daß der Widerstand auch von verschiedenen äußeren Faktoren wie Sauerstoffpartialdruck, Aktivierung, Alterung oder Vergiftung abhängt, so daß eine exakte Meßwerterfassung nicht mehr möglich ist.

### Vorteile der Erfindung

Der erfindungsgemäße Temperaturfühler mit den im Anspruch 1 genannten Merkmalen bietet den Vorteil, daß eine wesentlich genauere Meßwerterfassung erfolgen kann. Dadurch, daß die Leiterbahn wenigstens einen Abschnitt aufweist, der aus einem Festelektrolyten besteht, kann einerseits der günstige Widerstands-temperaturkoeffizient genutzt werden und andererseits ist dieser Bereich den verschiedenen störenden äußeren Faktoren, wie Vergiftung, Aktivierung, Alterung und Sauerstoffpartialdruck nicht ausgesetzt.

Besonders vorteilhaft ist es dabei, die Leiterbahn des Temperaturfühlers mit einer Isolationsschicht zu bedecken. Eine solche Isolationsschicht kann beispielsweise aus Aluminiumoxid bestehen.

Weiterhin vorteilhaft ist es, den Temperaturfühler in einer Schicht, die die Heizeinrichtung trägt, zu integrieren, da diese durch Isolationsschichten gegenüber anderen Elementen des Gassensors abgegrenzt ist. In diesem Fall kann zur Vereinfachung der Herstellung des Gassensors ein Teilabschnitt der Leiterbahn der Heizeinrichtung einem Teilabschnitt der Leiterbahn des Temperaturfühlers entsprechen. Der Abschnitt des Temperaturfühlers, der den Festelektrolyten aufweist, liegt dabei einerseits an der Leiterbahn der Heizeinrichtung an und andererseits liegt er an einer Leiterbahn des Temperaturfühlers an.

Bevorzugt ist ferner, die temperaturabhängige Änderung des Widerstands mittels einer beaufschlagten Wechselspannung zu erfassen.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der Zeichnungen näher erläutert. Es zeigen:
- Figur 1: eine schematische Explosionsansicht eines Gassensors;
- Figur 2: eine schematische Draufsicht eines Ausführungsbeispiels eines Temperaturfühlers und
- Figur 3: eine schematische Draufsicht einer alternativen Ausführungsform eines Temperaturfühlers.

### Beschreibung des Ausführungsbeispiels

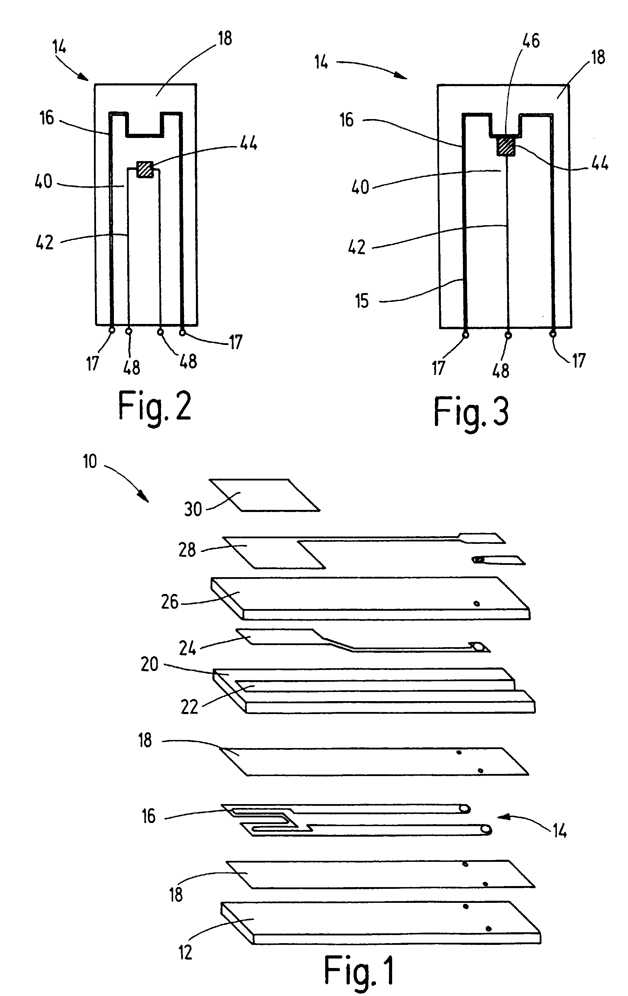

In Figur 1 ist in einer schematischen Explosionsansicht der Aufbau eines Gassensors 10 dargestellt. Die einzelnen Schichten werden beispielsweise durch Foliengießen, Stanzen, Siebdrucken, Läminieren, Schneiden, Sintern oder dergleichen erhalten. Der hier beispielhaft dargestellte Gassensor 10 besteht aus einer Trägerschicht 12, auf der eine Heizeinrichtung 14 aufgebracht ist. Die Heizeinrichtung 14 weist üblicherweise eine Leiterbahn 16 auf, die beispielsweise aus einem Cermet besteht und die durch zwei Isolationsschichten 18 abgeschirmt wird.

Des weiteren weist ein solcher Gassensor 10 eine Schicht 20 auf mit einer Vertiefung 22, in der ein Referenzgas eingeschlossen ist. Oberhalb der Vertiefung 22 liegt eine Cermetelektrode 24 an, die von einer Schicht aus einem Festelektrolyten 26 abgedeckt wird. Nachfolgend ist eine zweite Cermetelektrode 28 angeordnet, welche durch eine poröse Schutzschicht 30 bedeckt wird.

Die Funktionsweise eines Gassensors 10 ist bekannt und soll im Rahmen dieser Beschreibung nicht näher erläutert werden. Notwendige Voraussetzung für einen Betrieb ist zum einen das Erreichen einer Temperatur von über 300 °C, was mittels der Heizeinrichtung 14 ermöglicht wird und zum anderen die Erfassung einer Ist-Temperatur zur Ermittlung eines temperaturabhängigen Korrekturfaktors für die Meßwertbestimmung.

Die Figur 2 zeigt eine Draufsicht auf einen erfindungsgemäßen Temperaturfühler 40, der in dem Bereich der Heizeinrichtung 14 untergebracht ist. Selbstverständlich kann der Temperaturfühler 40 auch in anderen Bereichen des Gassensors 10 angeordnet werden. Es ist jedoch herstellungsbedingt besonders günstig, diesen in dem Bereich der Heizeinrichtung 14 anzuordnen, da hier bereits die notwendigen Isolationsschichten 18 vorhanden sind.

Der Temperaturfühler 40 besteht dabei aus einer Leiterbahn 42, die wenigstens einen Abschnitt 44 aufweist, der aus einem Festelektrolyt besteht. Die Leiterbahn 42 des Temperaturfühlers 40 liegt dabei ebenso, wie die Leiterbahn 16 der Heizeinrichtung 14 zwischen zwei Isolationsschichten 18 und ist damit vor störenden äußeren Einflüssen geschützt. Durch das Anlegen einer Wechselspannung an den Kontaktpunkten 48 erfolgt eine Messung einer Leitfähigkeit. Aufgrund des großen Widerstandstemperaturkoeffizienten der Leiterbahn 42 in dem Abschnitt 44 ist eine ausreichende Temperaturabhängigkeit des Widerstands für eine geeignete Steuerung der Temperatur gegeben. Die zur Auswertung und Steuerung der Temperatur notwendigen Bauelemente des Gassensors 10 sind aus Gründen der Übersichtlichkeit nicht dargestellt.

Die Figur 3 zeigt eine alternative Ausführungsform des Temperaturfühlers 40. Dabei ist ein Teilabschnitt 15 der Leiterbahn 16 der Heizeinrichtung 14 gleichzeitig auch ein Teilabschnitt 15 der Leiterbahn 42 des Temperaturfühlers 40. Auf diese Weise ist zum einen die Anzahl der Kontaktpunkte kleiner und zum anderen ist der Materialaufwand verringert. Während der Messung wird die Leiterbahn 42 an den Kontaktpunkten 17, 48 mit einer Wechselspannung beaufschlagt. Dabei kann die Wechselspannung von einer zum Betrieb der Heizeinrichtung 14 notwendigen Gleichspannung überlagert werden oder die Heizbetriebspannung wird während der Messung unterbrochen.

Als Festelektrolyt für den Abschnitt 44 kann beispielsweise stabilisiertes Zirkoniumdioxid eingesetzt werden, da dieses besonders einfach nach gängigen Herstellungsverfahren eingebracht werden kann. Alternativ eignen sich jedoch auch andere Materialien, die in dem Temperaturbereich des Betriebs ausgeprägte Widerstandsänderungen zeigen.

## Patentansprüche

1. Temperaturfühler, insbesondere für einen Gassensor, mit wenigstens einer Leiterbahn, wobei eine temperaturabhängige Änderung eines Widerstands der Leiterbahn erfaßt und ausgewertet wird, **dadurch gekennzeichnet**, daß die Leiterbahn (42) wenigstens einen Abschnitt (44) aufweist, der aus einem Festelektrolyt besteht.

2. Temperaturfühler nach Anspruch 1, **dadurch gekennzeichnet**, daß die Leiterbahn (42) zwischen zwei Isolationsschichten (18) angeordnet ist.

3. Temperaturfühler nach Anspruch 2**, dadurch gekennzeichnet**, daß die Leiterbahn (42) in dem Bereich einer von Isolationsschichten (18) bedeckten Heizeinrichtung (14) angeordnet ist.

4. Temperaturfühler nach Anspruch 3, **dadurch gekennzeichnet**, daß ein Teilabschnitt (15) einer Leiterbahn (16) der Heizeinrichtung (14) einem Teilabschnitt (15) der Leiterbahn (42) des Temperaturfühlers (40) entspricht.

5. Temperaturfühler nach einem der vorhergehenden Ansprüche, **dadurch gekennzeichnet**, daß zur Erfassung des Widerstands der Leiterbahn (42) diese mit einer Wechselpannung beaufschlagt wird.

6. Temperaturfühler nach einem der vorhergehenden Ansprüche, **dadurch gekennzeichnet**, daß als Festelektrolyt Zirkoniumdioxid eingesetzt wird.
